Europäisches Patentamt

European Patent Office

Office européen des brevets

(19)

(11) Publication number: 0 402 166
A2

# (12) EUROPEAN PATENT APPLICATION

(21) Application number: 90306270.1

(22) Date of filing: 08.06.90

(51) Int. Cl.⁵: **B65D 25/32, B29C 45/26, B65D 6/32**

(30) Priority: 08.06.89 GB 8913251

(43) Date of publication of application:
12.12.90 Bulletin 90/50

(84) Designated Contracting States:
DE FR GB

(71) Applicant: PACKAGING INNOVATION LIMITED
6 York Row
Wisbech, Cambridgeshire PE13 1EF(GB)

(72) Inventor: Kelsey, Steven Frederick
207 Pitshanger
Ealing, London W5 1QR(GB)

(74) Representative: Rackham, Stephen Neil et al
GILL JENNINGS & EVERY 53-64 Chancery
Lane
London WC2A 1HN(GB)

(54) Plastics container.

(57) A plastics container has an injection moulded hollow and generally tubular main body portion (1). A strap (2) is moulded integrally with the main body portion (1) towards one end. The strap extends circumferentially around the main body portion (1) and its ends extend radially inwards to meet the main body portion at diametrically opposed regions. The strap (2) includes regions (6) of reduced thickness towards each end. In use, the regions of reduced thickness buckle to enable the strap to be pulled up away from the container thus providing a handle for the container. A base (9) closes the other end of the main body portion (1).

In a preferred example, the main body portion (1) includes a radially stepped portion (3). The radially stepped portion is formed in a cavity defined between an inner core (13) and an axially extending top core (14) while at the same time the strap (2) is formed in a cavity between the top core (14) and a tool (15), which may be axially split, which engages the radially outer side of the top core (14).

Fig.1.

## PLASTICS CONTAINER

The present invention relates to plastics containers and in particular to containers for holding paint.

Traditionally paint has been sold in metal cans with push-fit lids. Typically a handle is provided which may be formed from plastics or metal. The ends of the handle are joined to the can at diametrically opposed points and are arranged to pivot about those points.

As an alternative to the conventional metal cans it has been proposed to use plastics containers for paint. Plastics containers potentially offer the advantages of ease of manufacture in a variety of shapes and finishes. In practice however, it has been found difficult to provide a plastics container of sufficient strength at a commercially acceptable cost in terms of materials and manufacture.

According to a first aspect of the present invention, a plastics container for paint comprises: an injection moulded hollow generally tubular main body portion; a strap moulded integrally with the main body portion towards one end of the main body portion and extending circumferentially around the main body portion, the ends of the strap extending radially inwards to meet the main body portion, the strap including regions of reduced thickness towards each end, in use the regions of reduced thickness buckling to enable the strap to be pulled up away from the container to provide a handle for the container; and a base closing the other end of the main body portion.

The tubular main body portion need not be cylindrical and may, for example, be of rectangular or off-square cross section, in which case the strap is correspondingly shaped.

The present invention provides a container for paint which has many advantages over known containers. The use of a handle which is moulded integrally with the main body provides increased strength: this is· an important consideration since the container may be required to hold as much as 6 litres of paint having a weight of 24 kg or more. By contrast, in known designs where the handle and container are formed separately the join between the handle and the container is a point of weakness. Injection moulding the handle integrally with the container has the further advantage that the time taken to form the container is reduced since there is no need for a further step in which the handle is assembled to the container.

Preferably the base is formed separately from the main body portion and welded to the main body portion to close the other end of the main body portion. Preferably the main body portion includes a radially stepped portion at its one end and a lip extends inwards from the radially stepped portion and in use receives a top to close the one end of the main body portion.

Preferably the circumferentially extending edge of the strap nearest the one end of the main body portion is radially inwardly curved.

The provision of an inwardly curved portion on the upper edge of the strap stiffens the strap and so improves the performance of the strap as a handle.

According to a second aspect of the present invention, a method of forming a plastics paint container comprises injection moulding a hollow generally tubular main body portion and a strap formed integrally with the main body portion towards one end and extending circumferentially around the main body portion, the ends of the strap extending radially inwards to meet the main body portion, the main body portion being open at both ends, and fitting a base to the main body portion to close the other end of the main body portion.

Preferably the base includes a curved lip at its radially outer edge and a skirt depending from the curved lip, the curved lip engaging the inside of the main body portion to form a liquid tight seal and a weld being formed between at least part of the skirt and an adjacent region of the main body portion to fix the base in place.

Preferably the main body portion includes an axially extending radially stepped portion at its one end and the step of injection moulding includes forming the stepped portion in a cavity defined by an inner core and an axially extending top core positioned outside the inner core and at the same time forming the strap in a cavity defined by the axially extending top core and a tool engaging the radially outer side of the top core. Preferably thestrap is formed with its upper circumferential edge curved radially inwards and the tool is axially split, the lower part of the tool being arranged to retain the strap as the upper part of the tool is opened and the top core is retracted, subsequently the lower part of the tool being opened and the inner core being retracted to release the container.

Preferably the lower part of the tool includes a spur on its radially inward face arranged to engage and hold the strap.

The main body portion may be formed with an integral diaphragm across the opening in its upper end in which case the container is filled via its other end prior to the fitting of the base.

A container and method in accordance with the present invention will now be described in detail with reference to the Figures of the accompanying drawings in which:

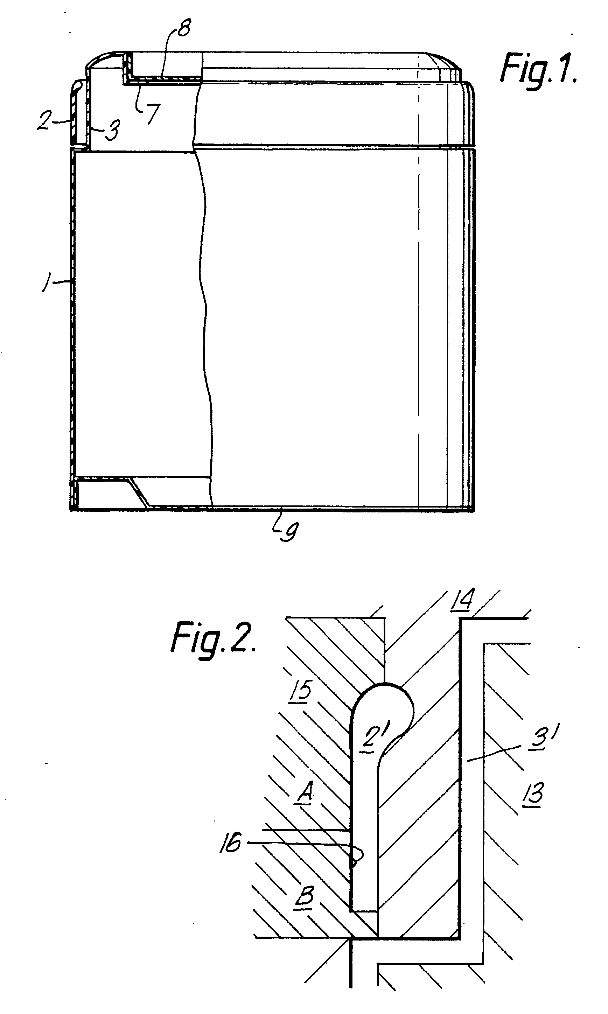

Figure 1 is a scrap section of the container;

Figure 2 is a section through the mould;

Figure 3 is a scrap section on-line X-X; and

Figure 4 is a section showing the base in the region of the container wall;

Figure 5 is a plan; and

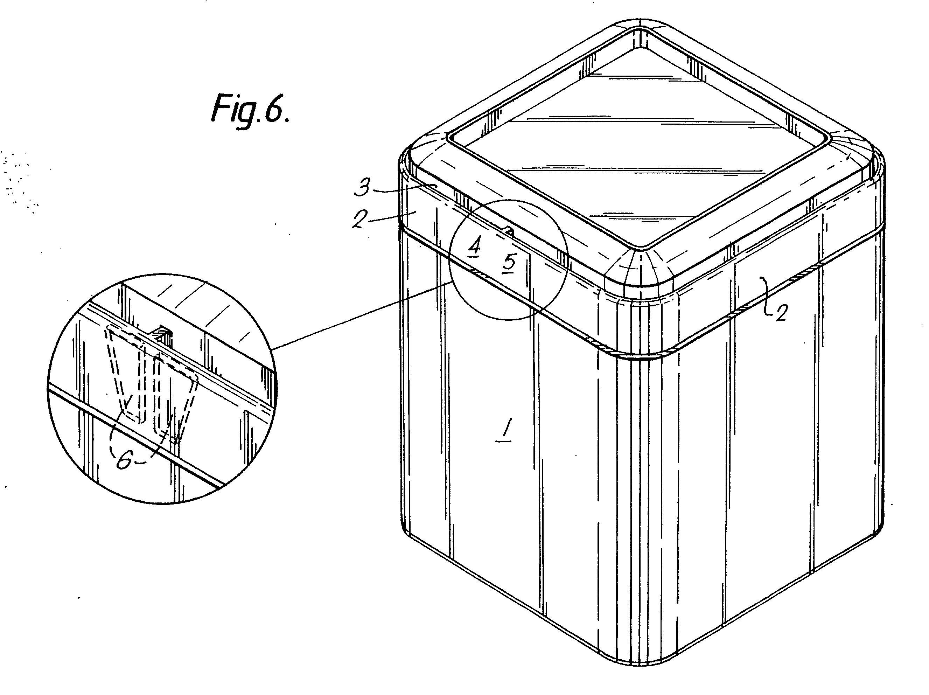

Figure 6 is a perspective view.

A plastics container for paint comprises a main body portion 1 and a handle 2. The main body portion 1 is tubular with a generally rectangular cross section and has an axially extending radially inwardly stepped portion 3.

The handle 2 takes the form of a pair of straps formed integrally with the main body portion 1 and extending circumferentially around the main body portion 1 adjacent to the stepped portion 3. The ends 4,5 of the handle 2 extend radially inwards to join the stepped portion 3 in regions which are diametrically opposed. Regions 6 of the strap adjacent its ends 4,5 are formed with a reduced width. In use, these regions buckle enabling the straps to be moved out of the radial plane into a plane substantially parallel to the longitudinal axis of the container to provide a handle to be grasped by the user.

An annular lip 7 extends radially inwards from the upper end of the radially stepped portion 3. The lip 7 is shaped to receive a push-fit lid 8 to close the upper end of the container. In the preferred example interference between the lid 8 and the lip 7 is relied upon to provide a liquid tight seal. In an alternative example the main body portion is formed with an integral diaphragm extending completely across the upper end of the container from the lip 7 to provide a primary seal. In this case the lid 8 is fitted as before and is used to seal the container once the user has broken the primary seal.

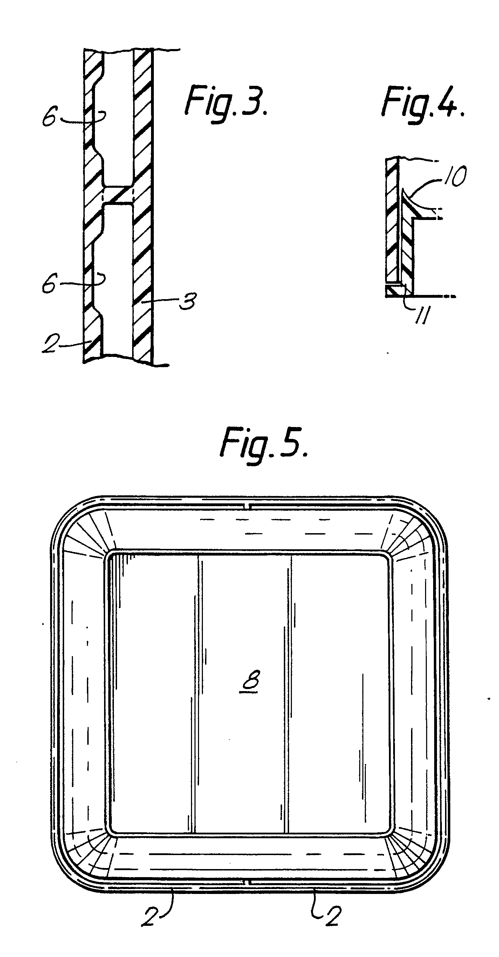

A base 9 is fitted to the lower end of the main body portion 1. The base 9 includes a curved lip 10 which extends around the outer circumference of the base. When the base 9 is fitted to the main body portion 1 the lip 10 engages the inner surface of the main body portion 1 forming a liquid-tight seal. A skirt 11 depends from the lip 10 and is spot-welded to the wall of the main body portion 1 to fix the base 9. In Figure 4 the extent and curvature of the lip are exaggerated for clarity.

A bar 12 is formed integrally with the main body portion 1 and extends across the opening defined by the lip 7 to provide a surface against which the user can wipe a paint brush.

In the preferred example the container is formed from polypropylene although other materials such as PEP, PVC or polycarbonate may alternatively be used. The main body portion 1 and strap 2 are formed integrally by injection moulding in a single mould. The lid 8 and base 9 are formed separately and subsequently assembled to the main body portion 1. The injection-moulding process is largely conventional in nature but is distinguished by the features of the mould necessary to produce a handle integral with the main body. The cavity for the main body portion 1, including the stepped portion 3 and lip 7, is formed between an inner core 13 and a top core 14. The top core 14 extends radially across the top of the cavity for the main body portion and extends axially downwards outside the inner core 13 to define the cavity 3′ for the stepped portion 3. An axially split tool 15 engages the radially outer side of the top core 14 and together with the top core 14 defines the cavity 2′ for the handle 2. The lower part B of the split tool includes a spur 16.

After the cavities have been injected with hot plastics material in a conventional fashion, and after an appropriate dwell time for the plastics material to harden at least partially, the mould is opened in the following sequence. First tool A is opened freeing the upper part of the strap 2 and allowing the withdrawal of the top core 14. As the top core 14 is retracted tool B holds the strap 2 in place, the tool engaging the strap 2 with the spur 16 on its radially inner face. Subsequently after the top core 14 is withdrawn tool B opens and the inner core 13 is retracted allowing the finished component to be ejected. Subsequently the lid and base are fitted to the container to complete the process of manufacture.

The present invention reduces the time taken to form the container and is particularly well suited for use in an integrated container manufacture and filling operation. When the container is formed with an integral diaphragm across the upper opening then the container is filled with paint via the lower end of the main body portion 1 prior to the fitting of the base 9. Otherwise the container may be filled via the opening defined by the lip 7 prior to the fitting of the lid 8.

**Claims**

1. A plastics container for paint comprising:
an injection moulded hollow generally tubular main body portion (1);
a strap (2) moulded integrally with the main body portion (1) towards one end of the main body portion and extending circumferentially around the main body portion, the ends of the strap extending radially inwards to meet the main body portion, the strap including regions (6) of reduced thickness towards each end, in use the regions of reduced thickness buckling to enable the strap to be pulled up away from the container to provide a handle for the container; and
a base (9) closing the other end of the main body portion (1).

2. A container according to claim 1, in which the base (9) is formed separately from the main body portion (1) and welded to the main body portion (1) to close the other end of the main body portion.

3. A container according to claim 1 or 2, in which the main body portion (1) includes a radially stepped portion (3) at its one end and a lip extending inwards from the radially stepped portion, in use the lip receiving a top to close the one end of the main body portion (1).

4. A container according to any one of the preceding claims, in which the circumferentially extending edge of the strap (2) nearest the one end of the main body portion (1) is radially inwardly curved.

5. A container according to any one of the preceding claims, in which the base (9) includes a curved lip (10) at its radially outer edge and a skirt depending from the curved lip, the curved lip engaging the inside of the main body portion (1) to form a liquid tight seal, the base (9) being fixed to the main body portion (1) by a weld formed between at least part of the skirt and an adjacent region of the main body portion (1).

6. A method of manufacturing a plastics container for paint comprising:
injection moulding a hollow generally tubular main body portion (1) and a strap (2) formed integrally with the main body portion towards one end and extending circumferentially around the main body portion, the ends of the strap extending radially inwards to meet the main body portion, the strap including regions (6) of reduced thickness towards each end, in use the regions of reduced thickness buckling to enable the strap to be pulled up away from the container to provide a handle for the container, the main body portion being initially open at one or both ends; and
fitting a base (9) to the main body portion (1) to close the other end of the main body portion.

7. A method according to claim 6, in which the base (9) includes a curved lip (10) at its radially outer edge and a skirt depending from the curved lip, the curved lip engaging the inside of the main body portion (1) to form a liquid tight seal, the method further comprising forming a weld between at least part of the skirt and an adjacent region of the main body portion (1).

8. A method according to claim 6 or 7, in which the main body portion (1) includes an axially extending radially stepped portion (3) at its one end and the step of injection moulding includes forming the stepped portion (3) in a cavity defined by an inner core (13) and an axially extending top core (14) positioned outside the inner core (13) and at the same time forming the strap (2) in a cavity defined by the axially extending top core (14) and a tool (15) engaging the radially outer side of the top core (14).

9. A method according to claim 8, in which the strap (2) is formed with its upper circumferential edge curved radially inwards and the tool (15) is axially split, the lower part of the tool (B) being arranged to retain the strap (2) as the upper part of the tool (A) is opened and the top core (14) is retracted, subsequently the lower part of the tool (B) being opened and the inner core being retracted to release the container.

10. A method according to claim 9, in which the lower part of the tool (B) includes a spur on its radially inward face arranged to engage and hold the strap (2).

11. A method according to any one of claims 6 to 10, in which the main body portion (1) is formed with an integral diaphragm extending across the opening at its one end, and in which the container is filled with paint via its other end prior to the fitting of the base (9).

Fig.1.

Fig.2.

*Fig.3.*

*Fig.4.*

6

6

3

2

10

11

*Fig.5.*

8

2

2

Fig.6.

EP 0 402 166 A2